# EUROPÄISCHE PATENTSCHRIFT

(11) **EP 3 376 390 B1**
(45) Veröffentlichungstag und Bekanntmachung des Hinweises auf die Patenterteilung: **30.10.2019**
(21) Anmeldenummer: 17161533.9
(22) Anmeldetag: 17.03.2017
(51) Int. Cl.: G06F 11/14, G06F 11/18, G05D 1/00, G05B 19/042

(54) **FEHLERTOLERANTES VERFAHREN ZUR STEUERUNG EINES AUTONOMEN KONTROLLIERTEN OBJEKTES**
FAULT TOLERANT METHOD FOR CONTROLLING AN AUTONOMOUS CONTROLLED OBJECT
PROCÉDÉ TOLÉRANT AUX PANNES DESTINÉ À COMMANDER UN OBJET AUTONOME CONTRÔLÉ

(43) Veröffentlichungstag der Anmeldung: 19.09.2018
(73) Patentinhaber: TTTech Auto AG, 1040 Wien (AT)
(72) Erfinder: Kopetz, Hermann, 2500 Baden (AT); POLEDNA, Stefan, 3400 Klosterneuburg (AT); Niedrist, Georg, 2353 Guntramsdorf (AT); Schmidt, Eric, 2143 Großkrut (AT); Helpa, Christopher, 1180 Wien (AT)
(74) Vertreter: Patentanwaltskanzlei Matschnig & Forsthuber OG

(56) Entgegenhaltungen:
- WO-A1-2016/023561
- US-A1- 2015 012 166
- US-A1- 2016 033 965
- US-B1- 6 393 362
- MOGENS GRAF PLESSEN ET AL: "Spatial-Based Predictive Control and Geometric Corridor Planning for Adaptive Cruise Control Coupled With Obstacle Avoidance", IEEE TRANSACTIONS ON CONTROL SYSTEMS TECHNOLOGY., 1. Januar 2017 (2017-01-01), Seiten 1-13, XP055416690, US ISSN: 1063-6536, DOI: 10.1109/TCST.2017.2664722

## Beschreibung

Die Erfindung betrifft ein Verfahren zur Steuerung eines kontrollierten Objektes, beispielsweise eines Fahrzeugs, das in einer sich verändernden Umgebung eingebettet ist, wobei ein die Steuerung durchführendes elektronisches System Sensoren, insbesondere eine Vielzahl von Sensoren, Aktuatoren, insbesondere eine Vielzahl von Aktuatoren, und Knotenrechner, insbesondere eine Vielzahl von Knotenrechnern, umfasst, welche über ein Echtzeitkommunikationssystem Daten austauschen.

Weiters betrifft die Erfindung ein elektronisches System, z.B. ein Computersystem, zur Steuerung eines kontrollierten Objektes, beispielsweise eines Fahrzeugs, das in einer sich verändernden Umgebung eingebettet ist, wobei das elektronische System Sensoren, insbesondere eine Vielzahl von Sensoren, Aktuatoren, insbesondere eine Vielzahl von Aktuatoren, und Knotenrechner, insbesondere eine Vielzahl von Knotenrechnern, umfasst, welche über ein Echtzeitkommunikationssystem Daten austauschen.

Die vorliegende Erfindung liegt im Bereich der Computertechnik. Sie betrifft ein Verfahren und ein elektronisches System zur fehlertoleranten Steuerung eines kontrollierten Objektes, insbesondere eines autonomen kontrollierten Objektes, insbesondere eines Fahrzeugs.

Aus der US 6,393,362 B1 ist ein Verfahren und eine Vorrichtung zum kollisionsfreien Betreiben eines autonomen Fahrzeuges beschrieben.

Das Dokument MOGENS GRAF PLESSEN ET AL: "Spatial-Based Predictive Control and Geometrie Corridor Planning for Adaptive Cruise Control Coupled With Obstacle Avoidance", IEEE TRANSACTIONS ON CONTROL SYSTEMS TECHNOLOGY., 1. Januar 2017 (2017-01-01), Seiten 1-13, XP055416690, US beschreibt ein das Betreiben eines autonomen Fahrzeuges unter Verwendung eines Korridor-Planers.

Die Entwicklungen der Sensortechnik und der Computertechnik ermöglichen die weitgehend autonome Steuerung von technischen Anlage und Objekten, wie z.B. Fahrzeugen, welche autonom ein Ziel ansteuern.

Laut Wikipedia [4] wird die Klassifizierung des autonomen Fahrens in sechs Stufen vorgenommen:
**Level 0:** "Driver only", der Fahrer fährt selbst, lenkt, gibt Gas, bremst etc.
**Level 1:** Bestimmte Assistenzsystem helfen bei der Fahrzeugbedienung (u.a. ACC).
**Level 2:** Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
**Level 3:** Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Diese Form der Autonomie ist auf Autobahnen technisch machbar. Der Gesetzgeber arbeitet darauf hin, Level 3-Fahrzeuge zuzulassen. Man spricht von einem Zeitrahmen bis 2020.
**Level 4:** Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
**Level 5:** Die völlige Autonomie des Fahrzeugs. Das Fahrzeug ist ohne Lenkrad ausgestattet, das Fahrzeug kann sich fahrerlos bewegen.

In am Markt erhältlichen Fahrzeugen wird gegenwärtig der Level 2 realisiert. Bei Level 2 ist der Fahrer verpflichtet, die ordnungsgemäße Funktion des Computersystems kontinuierlich zu überwachen und im Fehlerfall sofort einzugreifen. Bei den höheren Automatisierungsstufen muss das Computersystem fehlertolerant ausgeführt sein, um die Sicherheit des Fahrzeugs auch bei einem Fehler im Computersystem zu gewährleisten.

In der ISO 26262 Norm wird ein elektronisches System (Hardware plus Software) in einem Fahrzeug einer von vier Integritätsstufen (Stufe ASIL A bis ASIL D) zugeordnet, wobei die Stufe ASIL D die höchste Integritätsstufe darstellt [5]. Die Integrität von elektronischen Systemen zur vollautomatisierten Fahrzeugsteuerung (Level 4 und Level 5) muss ASIL D entsprechen. Während bei ASIL B die Wahrscheinlichkeit für das Auftreten eines gefährlichen Fehlers, der schwerwiegende Folgen für die Sicherheit eines Fahrzeugs hat, kleiner sein muss als 10⁻⁶ pro Stunde (d.s.103 FIT), muss diese Wahrscheinlichkeit bei ASIL D kleiner sein als 10⁻⁸ pro Stunde (d.s. 10 FIT).

Die Ursache für das Auftreten eines Ausfalls eines elektronisches System kann ein Alterungsfehler (physical fault) der Hardware oder ein Entwurfsfehler (design fault) in der Hardware oder Software sein.

Ein Alterungsfehler liegt vor, wenn eine Baueinheit, die zu Beginn ihrer Lebenszeit voll funktionstüchtig, war auf Grund von Alterungsprozessen der Hardware ausfällt. Bei state of the art automotive chips ist die permanente Fehlerrate für Alterungsfehler <100 FIT. Durch den Einsatz von aktiver Redundanz (TMR oder self-checking components) kann die geforderte Fehlerrate von ASIL D (kleiner als 10) FIT in der Hardware erreicht werden.

Entwurfsfehler können in der Hardware oder in der Software enthalten sein. Die Folgen von Hardware Entwurfsfehler können durch aktive Redundanz von diversitärer Hardware beherrscht werden.

Maßnahmen, die zu einer Reduktion der Wahrscheinlichkeit für das Vorhandensein eines unentdeckten Entwurfsfehlers in der Software führen, sind ein systematischer Entwurfsprozess, Verifikation und Validierung, vor allem durch umfangreiches Testen.

Eine wesentliche Ursache für das Auftreten von Entwurfsfehlern in der Software liegt in der Komplexität der Software. Entsprechend dem State-of-the-Art ist es möglich, ein komplexes Softwaresystem so gründlich zu validieren, dass die geforderte Fehlerrate von ASIL B, nicht jedoch von ASIL D, erreicht werden kann.

Es entspricht dem Stand der Technik, dass *Kontrollsysteme* (das sind Systeme zur Echtzeit-Steuerung und/oder Regelung eines kontrollierten Objektes), wie z.B. ein gegenständliches elektronisches System, periodisch ablaufen [8, p.7]. Das kontrollierte Objekt wird zu periodischen Beobachtungszeitpunkten (*sampling points*) beobachtet. Die dabei erfassten Daten bilden die Grundlage für die, vorzugsweise schnellst-mögliche, Berechnung von (neuen) Sollwerten für Aktuatoren, die das Verhalten des kontrollierten Objektes beeinflussen.

Wir bezeichnen die sich periodisch wiederholende Ausführung einer Aufeinanderfolge von, möglicherweise verteilten, Berechnungen, die nach jeder Beobachtung durchgeführt werden, als *Frame.*

Die Folge von Softwareprozessen, die innerhalb eines Frames abgearbeitet werden müssen, ist in einem oder mehreren *Datenflusspfaden* (DFP) festgelegt.

Mit jedem Frame sind zwei Zeitparameter verbunden:
Die *Ausführungsdauer* gibt das Zeitintervall zwischen dem sampling point und dem Zeitpunkt der Ausgabe der Ergebnisse des Frames an die Aktuatoren des zu kontrollierenden Objekts an. Je kürzer die Ausführungsdauer eines Frames ist, desto besser ist die Güte eines Kontrollsystems.

Das *Frame-Intervall (sampling time)* gibt den zeitlichen Abstand zwischen zwei aufeinanderfolgenden sampling points an.

Die US0160033965 (vgl. [1]) offenbart eine fehlertolerante Hardware- und Software-Architektur zur Steuerung autonomer Fahrzeuge, die als Ausgangspunkt für die Erfindung dient.

Es ist eine Aufgabe der Erfindung, das sichere Verhalten eines kontrollierten Objektes auch nach dem Auftreten eines Hard- oder Softwarefehlers in einem Frame des Kontrollsystems zu gewährleisten.

Diese Aufgabe wird mit einem eingangs erwähnten Verfahren gemäß Anspruch 1 und einem eingangs erwähnten elektronischen System gemäß Anspruch 6, z.B. einem Computersystem, dadurch gelöst, dass das kontrollierte Objekt und dessen Umgebung mit Sensoren periodisch beobachtet werden, und in jedem Frame basierend auf den durch die Beobachtung des kontrollierten Objektes und dessen Umgebung erfassten Daten mindestens zwei unabhängige Datenflusspfade, DFP, ausgeführt werden, wobei beispielsweise für jeden DFP die Beobachtung mittels unterschiedlicher Sensoren erfolgt, und wobei• ein erster DFP aus den durch die Beobachtung des kontrollierten Objektes und dessen Umgebung erfassten Daten mittels komplexer Software ein Modell des kontrollierten
Objektes und der Umgebung des kontrollierten Objektes ermittelt und auf Basis dieses Modells eine Trajektorien-Planung durchführt, um eine oder mehrere mögliche Trajektorien, die unter den gegebenen Umweltbedingungen einer vorgegeben Aufgabenstellung entsprechen, zu erstellen, und wobei
- ein zweiter DFP aus den durch die Beobachtung des kontrollierten Objektes und dessen Umgebung erfassten Daten mittels komplexer Software, welche diversitär zu der komplexen Software des ersten DFPs ist, ein Modell des kontrollierten Objektes und der Umgebung des kontrollierten Objektes ermittelt und auf Basis dieses Modells ein *sicheres Raum-Zeit Domain,* SRZD, festlegt, innerhalb welchem SRZD alle sicheren Trajektorien liegen müssen, und wobei
die Ergebnisse des ersten und des zweiten DFPs einer Entscheidungsinstanz übergeben werden, wobei die Entscheidungsinstanz mittels einer *einfachen Software* realisiert ist, und wobei die Entscheidungsinstanz überprüft, ob mindestens eine der vom ersten DFP ermittelten Trajektorien *sicher* ist, d.h. innerhalb des SRZD liegt, das von dem zweiten DFP ermittelt wurde, und wobei im Falle, dass dies zutrifft, eine vom ersten DFP ermittelte sichere Trajektorie ausgewählt wird, und wobei die Entscheidungsinstanz die der ausgewählten Trajektorie entsprechenden Sollwerte an eine Aktuatorsteuerung übergibt, und wobei im Falle, dass dies nicht zutrifft, auf die Ergebnisse mindestens eines folgenden Frames gewartet wird, und wobei im Falle, dass auch im nächsten oder übernächsten Frame keine sichere Trajektorie vorhanden, ist von der Entscheidungsinstanz auf eine Notlauftrajektorie umgeschaltet wird.

Wird also in einem Frame festgestellt, dass keine der von dem ersten DFP in diesem Frame ermittelten Trajektorien sicher ist, d.h. keine der Trajektorien innerhalb der von dem zweiten DFP in diesem Frame ermittelten SRZD liegt, so wird wie oben beschrieben auf das Ergebnis in mindestens einem auf den betrachteten Frame folgenden Frame gewartet, und wenn auch im (bezüglich des betrachteten Frames) nächsten oder übernächsten Frame keine sichere Trajektorie vorhanden, wird von der Entscheidungsinstanz auf eine Notlauftrajektorie umgeschaltet.

Die vorliegende Erfindung legt ein Verfahren und eine Hardware-Architektur zur Erhöhung der Sicherheit eines komplexen elektronischen Systems offen. Durch den gezielten Einsatz von Hardware- und Softwareredundanz wird die Zuverlässigkeit des elektronischen Systems signifikant erhöht. Die Erfindung erlaubt eine integrierte Behandlung von Alterungsfehlern in der Hardware und/ oder Fehlern im Entwurf der Hardware und/ oder der komplexen Software.

Beispielsweise kann jeder DFP die Beobachtungen aller Sensoren verwenden. Es kann aber auch vorgesehen sein, dass jeder DFP nur die Beobachtungen bestimmter Sensoren verwendet, und beispielsweise kann auch vorgesehen sein, dass jeder DFP nur speziell ihm zugeordnete Sensoren, d.h. deren Beobachtungen verwendet.

Die Sensoren sind vorzugsweise synchronisiert, d.h. alle Sensoren führen ihre Beobachtungen gleichzeitig (periodisch) durch.

Vorzugsweise werden die DFPs in einem Frame jeweils gleichzeitig ausgeführt. Dies bedeutet, dass einerseits Beobachtungen der Sensoren gleichzeitig stattfinden (siehe oben), sodass dass die DFPs zur gleichen Zeit starten, und dass weiters die Ergebnisse der DFPs der Entscheidungsinstanz zum gleichen Zeitpunkt übergeben werden.

Im Bereich der Sicherheitstechnik in der Luft und Raumfahrt wird zwischen einfacher und komplexer Software unterschieden [6]. Wenn die Software, die zum Einsatz kommt, einfach ist und formal überprüft und/oder umfassend getestet werden kann, so wird angenommen, dass die geforderte Fehlerrate von ASIL D durch einen sorgfältigen Entwicklungsprozess erreicht werden kann.

Wenn die Software, die zum Einsatz kommt, komplex ist, so wird angenommen, dass die Wahrscheinlichkeit für das Auftreten von Entwurfsfehlern ASIL B entspricht. Durch Softwareredundanz, d.h. die parallele Ausführung von zwei oder mehr diversitären ASIL B Software-Systemen mit einer anschließenden anwendungsspezifischen Gegenüberstellung der Ergebnisse kann die Zuverlässigkeit der Software signifikant erhöht werden. Ein Verfahren zur Erhöhung der Softwarezuverlässigkeit durch aktive Redundanz (mittels diversitärer Software ist in [7] beschrieben. Dieses Verfahren ist jedoch nicht einsetzbar, wenn sich die diversitären Software-Versionen nicht replika deterministisch verhalten.

Diversitäre Software ist nicht replika deterministisch, wenn in der Software ein Non-Deterministic Design Construct (NDDC) [8, p.128] vorhanden ist. Ein NDDC entscheidet zwischen zwei richtigen aber nicht kompatiblen Szenarien. Im Allgemeinen darf nicht angenommen werden, dass zwei diversitäre Versionen der Software mit NDDCs zu vergleichbaren Ergebnissen kommen.

Wenn z.B. auf einer Straße ein Felsbrocken liegt und die Entscheidung zu treffen ist, ob dieser Felsbrocken von einem Fahrzeug links oder rechts umfahren werden soll, so kann im Allgemeinen nicht angenommen werden, dass zwei diversitäre Software Versionen zu dem gleichen Ergebnis kommen. Obwohl beide Ergebnisse richtig sind, sind sie nicht replika deterministisch. Dadurch geht die Fehlertoleranz verloren.

Die autonome Führung eines Kraftfahrzeugs erfordert ein Softwaresystem zur Bilderkennung, Umweltmodellbildung und Trajektorienplanung. Dieses Softwaresystem ist nicht einfach, sondern komplex und beinhaltet üblicherweise NDDCs.

Es wird vorgeschlagen, das gesamte Softwaresystem in zwei Teile zu unterteilten. Der eine Teil enthält die komplexe Software. Der zweite Teil enthält eine einfache Software, vorzugsweise mit NDDCSs.

Die Zuverlässigkeit der komplexen Software wird durch die funktionelle Redundanz von zwei oder mehr diversen Versionen der komplexen Software, die auf unabhängigen Fault-Containment Units (FCUs) ausgeführt werden, signifikant erhöht. Die Zuverlässigkeit der einfachen Software wird durch erschöpfendes Testen und formale Analysen erreicht.

Um eine weitgehende Software-Diversität der komplexen Software zu erwirken, errechnet eine Softwareversion eine oder mehrere passende Trajektorien im Raum-Zeit Kontinuum, während eine anderer unabhängige Softwareversion ein Gebilde im Raum-Zeit Kontinuum bestimmt, in dem jede sichere Trajektorie liegen muss. Eine dritte unabhängige Softwareversion bestimmt eine Notlauftrajektorie, die das Fahrzeug in einen sicheren Zustand führt.

Eine Entscheidungsinstanz, die in einfacher Software ohne Softwareredundanz realisiert wird und vorzugsweise NDDCs enthält, überprüft die von der komplexen Software bereitgestellten alternativen Ergebnisse und entscheidet, welche Alternative ausgewählt wird. Diese einfache Software wird auf vorzugsweise einer fehlertoleranten Hardware ausgeführt, um auftretende Hardwarefehler zu maskieren.

Die vorliegende Erfindung beschreibt ein innovatives Verfahren, wie ein komplexes elektronisches System zur Steuerung eines, insbesondere sicherheitskritischen, kontrollierten Objektes, z.B. die Steuerung eines autonomen Fahrzeugs, realisiert werden kann. Es wird zwischen einfacher und komplexer Software unterschieden, wobei die einfache Software vorzugsweise auf einer fehlertoleranten Hardware ausgeführt wird, und wobei beispielsweise mehrere diversitäre Versionen einer komplexen Software gleichzeitig auf unabhängigen Fault-Containment Units (FCU) ausgeführt werden, und wo aus den Ergebnissen der komplexen Software von einer Entscheidungsinstanz, die mittels einer einfachen Software realisiert ist, ein Ergebnis ausgewählt wird, das an die Aktuatoren weiterzuleiten ist.

Vorteilhafte Ausgestaltungen des erfindungsgemäßen Verfahrens bzw. Systems sind im Folgenden beschrieben:
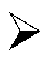 Die Berechnungen der Entscheidungsinstanz können auf einer TMR Hardware ausgeführt werden.
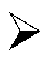 Die Berechnungen der Entscheidungsinstanz können gleichzeitig auf zwei unabhängigen self-checking Hardwarebaueinheiten ausgeführt werden.
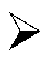 Von einem dritten unabhängigen DFP kann eine Notlauftrajektorie errechnet werden, welche an die Entscheidungsinstanz gesendet wird.
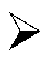 Die Entscheidungsinstanz überprüft nach Feststellung, dass die von der ersten DFP errechnete Trajektorie sicher ist, ob die Notlauftrajektorie sicher ist, und im Falle, dass die Notlauftrajektorie nicht vorhanden oder nicht sicher ist, und gibt eine Alarmmeldung ab, beispielsweise an einen Benutzer des kontrollierten Objektes, z.B. den Fahrer eines Fahrzeuges.

Im Folgenden ist die Erfindung an Hand eines in der Zeichnungen gezeigten Ausführungsbeispiels beschrieben. In den Zeichnungen zeigt
Fig. 1 ein Datenflussdiagramm eines komplexen elektronischen Systems zur Steuerung eines kontrollierten Objektes in Form eines Fahrzeugs,
Fig. 2 eine mögliche Hardwarearchitektur zur Realisierung des komplexen elektronischen Systems der Figur 1 mit einer TMR Hardware zur Ausführung eines NDDC, und
Fig. 3 zeigt eine mögliche Hardwarearchitektur zur Realisierung des komplexen elektronischen Systems der Figur 1 mit einer self-checking Hardware zur Ausführung eines NDDC.

Die folgende konkrete Beschreibung einer Realisierung behandelt eine der vielen möglichen Realisierungen des neuen Verfahrens am Beispiel eines autonomen Fahrzeugsteuerungssystems. Die Beschreibung verwendet Begriffe, die im Folgenden genau beschrieben sind. Diese Begriffe gelten nicht nur im Rahmen der Figurenbeschreibung, sondern im Zusammenhang der gesamten Offenbarung.

Ein *kontrolliertes Objekt* ("controlled object", abgekürzt CO) ist eine technische Anlage, die von einem elektronischen System, z.B. einem Computersystem, und/oder einem Menschen gesteuert wird, mit dem Ziel, im Laufe der Zeit eine vorgegebene Aufgabenstellung unter den gegebenen Umgebungsbedingungen zu erfüllen. Beispiele für COs sind: ein Fahrzeug, ein Flugzeug, eine Landmaschine, ein Roboter, oder eine Drohne.

Eine Aufgabenstellung für eine Drohne könnte beispielsweise darin bestehen, ein bestimmtes Ziel anzufliegen, unter Berücksichtigung eines gesperrten Teils des Luftraumes, oder unter Erreichung einer gewissen Mindestflughöhe, etc.

Ein *Umgebungsmodell* ist eine digitale Datenstruktur, die zu einem gegebenen Zeitpunkt ein Abbild der für die vorgegebene Aufgabe wesentlichen Charakteristika der Umgebung, insbesondere der Umgebung eines CO, darstellt. Ein Beispiel für ein Umgebungsmodell ist die Beschreibung einer Straße und der zum gewählten Zeitpunkt auf der Straße befindlichen statischen und dynamischen Objekte.

Eine *Trajektorie* ist ein Pfad im Raum-Zeit-Kontinuum, den ein CO im Laufe der Zeit ausführen kann, um eine vorgegebene Aufgabe zu erfüllen. Die Charakteristika der Trajektorien eines CO hängen von der Konstruktion des CO, der vorgegebenen Aufgabenstellung und den aktuellen Umgebungsbedingungen ab. Zum Beispiel bezeichnet man einen möglichen Weg, den ein Fahrzeug unter den gegebenen Umgebungsbedingungen ausführen bzw. zurücklegen kann, um sein Ziel zu erreichen als Trajektorie. Ein Charakteristikum einer Trajektorie bzw. der Trajektorien kann beispielsweise die Geschwindigkeit sein, mit welcher die Trajektorie durchfahren wird.

Unter einem *Softwareprozess* wird die Ausführung eines Programmsystems auf einem oder mehreren Computern verstanden.

Eine *Fault Containment Unit* (FCU) ist eine Baueinheit, die die unmittelbaren Folgen einer Fehlerursache abkapselt (6, p.155).

Unter dem Begriff *fehlertolerante Hardware* wird eine Hardwarearchitektur verstanden, die auftretende Hardwarefehler entsprechend der vorliegenden Fehlerhypothese maskiert. Beispiele für solche Hardwarearchitekturen sind Triple- Modulare Redundanz (TMR) oder die parallele Ausführung der Software auf self- checking Baueinheiten, wie in (6, p.156) beschrieben. Es entspricht dem State-of-the- art, dass die redundanten FCUs über mindestens zwei unabhängige Kommunikationskanäle ihre Eingangsdaten empfangen und über mindestens zwei unabhängige Kommunikationskanäle ihre Ausgabedaten weitergeben.

Ein Datenflusspfad (DFP) ist eine Aufeinanderfolge von verteilten Softwareprozessen, wobei der erste Softwareprozess Eingabedaten liest und die Ausgabedaten eines vorgelagerten Softwareprozesses die Eingabedaten für den folgenden Softwareprozess darstellen. Die Ausgabedaten des letzten Softwareprozesses sind die Ergebnisdaten des DFP. In vielen Anwendungsfällen der Echtzeitdatenverarbeitung übernimmt der erste Softwareprozess eines DFP die Sensordaten und produziert der letzte Softwareprozess eines DFP die Sollwerte für die Aktuatoren.

In den meisten Anwendungsfällen der Echtzeitdatenverarbeitung wird ein DFP zyklisch durchlaufen. Den zeitlichen Abstand zwischen zwei Zyklen bezeichnet man als Frame.

Zwischen zwei aufeinanderfolgenden Frames eines DFP kann ein innerer Zustand [8, p.84] eines Softwareprozesses gespeichert werden.

Zwei DFPs sind diversitär, wenn sie die gleiche Zielsetzung verfolgen, aber die Softwareprozesse der DFPs unterschiedliche Algorithmen (Algorithmen-Diversität) und/oder unterschiedliche Eingabedaten (Daten-Diversität) verwenden.

Eine *Umgebungsmodellbildung* ist ein Softwareprozess, der ausgehend von den statischen Daten der Umgebung und den von diversen Sensoren erfassten dynamischen Daten der Umgebung ein Umgebungsmodell erstellt.

Eine *Trajektorienplanung* ist ein Softwareprozess, der auf der Basis eines gegebenen Umgebungsmodells und einer gegebenen Zielsetzung eine oder mehrere mögliche Trajektorien festlegt, die eine vorgegebene Aufgabe bzw. Aufgabenstellung lösen.

Die *unmittelbare Zukunft* eines Zeitpunkts ist jenes Zeitintervall, das mit dem Zeitpunkt beginnt und endet, sobald der Prozess (z.B. das Fahrzeug) in einem sicheren Zustand ist.

Wenn z.B. 10 Sekunden erforderlich sind, um ein Fahrzeug zum Stillstand (sicherer Zustand) zu bringen, und eine Abtastrate von 30 Frames pro Sekunde vorgesehen ist, so beinhaltet die unmittelbare Zukunft eine Folge von 300 zeitlich äquidistanten Zeitpunkten.

Eine *sichere Trajektorie* ist eine Trajektorie im Raum-Zeit-Kontinuum, die den Weg eines Prozesses (z.B. eines Fahrzeugs) in der unmittelbaren Zukunft beschreibt, wobei dieser Weg frei von Hindernissen ist und alle in der unmittelbaren Zukunft relevanten (z.B. fahrdynamischen) Grenzen beachtet.

Wenn z.B. die Fahrbahn nass ist, so sind die fahrdynamischen Grenzen anders zu setzen als wenn die Fahrbahn trocken ist.

Eine *Notlauftrajektorie* ist eine sichere Trajektorie, die den Prozess (z.B. das Fahrzeug) in einen sicheren Zustand führt.

Ein *sicheres Raum-Zeit Domain* (SRZD) ist ein schlauchförmiges Gebilde im Raum-Zeit-Kontinuum, in dem alle sicheren Trajektorien der unmittelbaren Zukunft enthalten sind.

Eine *Entscheidungsinstanz* ist ein anwendungsspezifischer Softwareprozess, der eine Anzahl von Vorschlägen als Eingabedaten erhält, diese Vorschläge analysiert und die Freiheit hat, eine Entscheidung, zu treffen welcher - möglicherweise abgeänderter - Vorschlag ausgewählt wird. In vielen Fällen enthält eine Entscheidungsinstanz NDDCs.

Der *Normalbetrieb* ist dadurch charakterisiert, dass eine von der Trajektorien-Planung errechnete Trajektorie im sicheren Raum-Zeit Domain (SRZD) liegt.

Zum Beispiel erhält eine Entscheidungsinstanz eine Anzahl von Vorschlägen möglicher Trajektorien eines Fahrzeugs als Eingabe und entscheidet sich für eine - möglicherweise abgeänderte - Trajektorie die zur Ausführung gebracht wird.

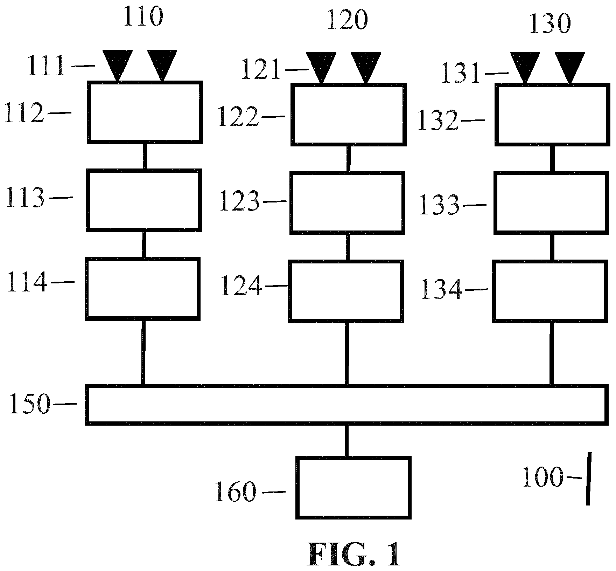

Fig. 1 zeigt ein Datenflussdiagramm eines komplexen elektronischen Systems zur autonomen Steuerung eines Fahrzeugs. Die senkrechten Verbindungslinien 100 der Kästchen von Fig. 1 zeigen den Datenfluss von oben nach unten.

In Fig. 1 sind drei diversitäre DFPs 110, 120 und 130 dargestellt. Jeder der DFPs verfügt über eigene Sensoren zur Beobachtung der Umwelt des Fahrzeugs. Die Sensoren werden zyklisch ausgelesen. Der erste DFP 110 hat die Sensoren 111, der zweite DFP 120 hat die Sensoren 121 und der dritte DFP 130 hat die Sensoren 131. Beispiele für Sensoren eines Fahrzeugs sind Kameras, Radarsensor, LIDAR Sensoren und Ultraschallsensoren. In der ersten Verarbeitungsstufe des DFP werden die rohen Sensordaten ausgelesen und vorverarbeitet. Das ist in DFP 110 der Softwareprozess 112, in DFP 120 der Softwareprozess 122 und in DFP 130 der Softwareprozess 132.

Es ist vorteilhaft, wenn die Softwareprozesse 112, 122 und 132 unterschiedliche Algorithmen (Algorithmen-Diversität) verwenden, die mit unterschiedlichen Eingabedaten versorgt werden (Daten-Diversität).

Es ist vorteilhaft, wenn die Sensoren 111, 121 und 131 die Umgebung gleichzeitig beobachten. Die gleichzeitige Beobachtung kann mit einem von einer fehlertoleranten globalen Zeit abgeleiteten verteilten Triggersignal erreicht werden.

In der zweiten Verarbeitungsstufe der DFPs wird auf der Basis der empfangene Sensordaten und Informationen über statische Parameter der Umgebung (z.B. aus vorliegendem Kartenmaterial eines Navigationssystems) eine Umgebungsmodellbildung vollzogen. Das ist in DFP 110 der Softwareprozess 113, in DFP 120 der Softwareprozess 123 und in DFP 130 der Softwareprozess 133.

Es ist vorteilhaft, wenn die Softwareprozesse 113, 123 und 133 unterschiedliche Algorithmen (Algorithmen-Diversität) verwenden, die mit unterschiedlichen Eingabedaten versorgt werden (Daten-Diversität).

In der dritten Verarbeitungsstufe des ersten DFP 110, d.i. der Softwareprozess 114, wird auf Basis der gebildeten Umgebungsmodelle der zweiten Verarbeitungsstufe 113 eine Trajektorienplanung vollzogen.

In der dritten Verarbeitungsstufe des zweiten DFP 120, d.i. der Softwareprozess 124, wird auf der Basis der gebildeten Umweltmodelle der zweiten Verarbeitungsstufe 123 ein sicheres Raum-Zeit Domain (SRZD), in dem alle sicheren Trajektorien liegen müssen, bestimmt.

In der dritten Verarbeitungsstufe des DFP 130, d.i. der Softwareprozess 134, wird auf der Basis der gebildeten Umweltmodelle der zweiten Verarbeitungsstufe 133 die Notlauftrajektorie errechnet, die das Fahrzeug innerhalb der unmittelbaren Zukunft in einen sicheren Zustand führen kann.

Die Trajektorienplanung 114 in der dritten Verarbeitungsstufe des ersten DFP 110 entwickelt eine oder mehrere alternative Trajektorien zur Zielerreichung, die einem folgenden Softwareprozess, einer Entscheidungsinstanz 150, angeboten werden. Die zum Vorschlag gebrachten Trajektorien können von der Trajektorienplanung 114 aus der Sicht der Sicherheit und der Effektivität in Bezug auf die Zielerreichung bzw. Aufgabenstellung bewertet werden.

Die Entscheidungsinstanz 150, die in einer einfachen Software realisiert ist, überprüft ob die ausgewählte Trajektorie der Trajektorienplanung 114 innerhalb des von dem Softwareprozess 124 des zweiten DFP 120 ermittelten sicheren Raum-Zeit Domain (SRZD) liegt. Wenn dies der Fall ist, werden die entsprechenden Sollwerte an die Aktuatoren übergeben.

Wenn keine der Trajektorie der Trajektorienplanung 114 innerhalb des von dem Softwareprozess 124 ermittelten SRZD liegt, dann gibt die Entscheidungsinstanz keine neuen Sollwerte an die Aktuatoren aus, sondern wartet auf das folgende Frame.

Wenn auch im folgenden Frame keine der Trajektorien der Trajektorienplanung 114 innerhalb des von dem Softwareprozess 124 ermittelten SRZD liegt, wählt die Entscheidungsinstanz die von dem Softwareprozess 134 angebotene Notlauftrajektorie aus und bringt das Fahrzeug in einen sicheren Zustand.

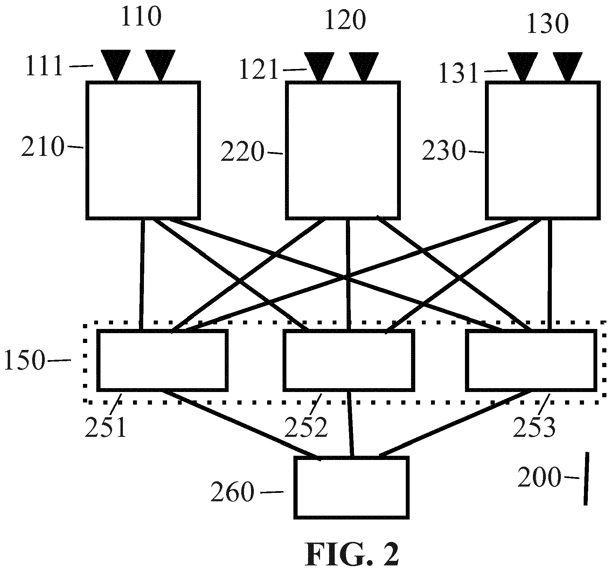

Fig. 2 zeigt eine mögliche Hardwarestruktur zur Ausführung der DFPs der Fig. 1. Die Kästchen der Fig. 2 stellen Baueinheiten dar. Die Verbindungslinien 200 der Baueinheiten von Fig. 2 zeigen die vorhanden Kommunikationskanäle zur Übertragung von Daten.

DFP 110 beinhaltet die Sensoren 111 und die Baueinheit 210. DFP 120 beinhaltet die Sensoren 121 und die Baueinheit 220. DFP 130 beinhaltet die Sensoren 131 und die Baueinheit 230. Die Baueinheit 210 bildet eine Fault-Containment Unit (FCU), die Hardwarekomponenten (Knotenrechner, Datenleitungen, Speicher) zur Ausführung der Softwareprozesse 112, 113 und 114 des DFP 110 enthält. Die Baueinheit 220 bildet eine Fault-Containment Unit (FCU), die Hardwarekomponenten (Knotenrechner, Datenleitungen, Speicher) zur Ausführung der Softwareprozesse 122, 123 und 124 des DFP 120 enthält. Die Baueinheit 230 bildet eine Fault-Containment Unit (FCU), die Hardwarekomponenten (Knotenrechner, Datenleitungen, Speicher) zur Ausführung der Softwareprozesse 132, 133 und 134 des DFP 130 enthält.

Die Entscheidungsinstanz 150 der Fig. 1 wird auf den drei Knotenrechnern 251, 252 und 253 gleichzeitig replika deterministisch ausgeführt, um Hardwarefehler maskieren zu können. Die Ergebnisse der drei Knotenrechnern 251, 252 und 253 werden einer, vorzugsweise intelligenten, Aktuatorsteuerung 260 übergeben, die eine bitweise zwei-aus-drei Votierung vornimmt.

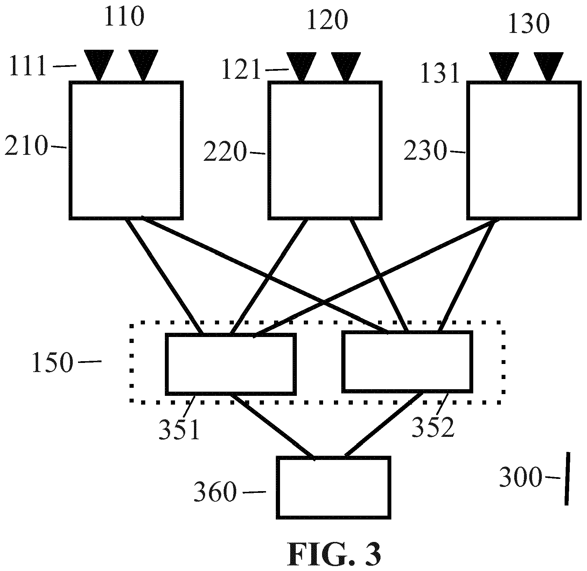

Fig. 3 zeigt eine andere Hardwarestruktur zur Ausführung der DFPs der Fig. 1. Die Kästchen der Fig. 2 stellen Baueinheiten dar. Gleiche Bezugszeichen in Fig. 3 und Fig. 2 bezeichnen dieselben Elemente.

Die Verbindungslinien 300 der Baueinheiten zeigen die vorhanden Kommunikationskanäle zur Übertragung von Daten. Im Unterschied zu Fig.2 wird in Fig. 3 die Entscheidungsinstanz 150 auf zwei self-checking Baueinheiten 351 und 352 ausgeführt. Eine, vorzugsweise intelligente, Aktuatorsteuerung 360 übernimmt eines der Resultate von 351 oder 352. Da die Softwareprozesse, die auf den Baueinheiten 351 und 352 ablaufen, replika-deterministisch sind und die Hardware der Baueinheiten 351 und 352 sich selbst überprüft, müssen die Resultate der Baueinheiten 351 und 352 identisch sein.

Im Normalbetrieb liegt, insbesondere in jedem Frame, mindestens eine von dem ersten DFP errechnete Trajektorie innerhalb des sicheren Raum-Zeit Domains (SRZD), das von dem zweiten DFP errechnet wurde. Um einen Ausfall oder einen Fehler in der dritten DFP, die die Notlauftrajektorien-Berechnung durchführt, erkennen zu können, ist vorzugsweise vorgesehen, dass im Normalbetrieb - insbesondere in jedem Frame - überprüft wird, ob die Notlauftrajektorie innerhalb des SRZD liegt. Wenn dies nicht der Fall ist, wird eine Alarmmeldung an den Fahrer gesendet, um ihm mitzuteilen, dass die Notlauftrajektorien-Berechnung ausgefallen ist.

Im Fehlerfall liegen die von dem ersten DFP errechneten Trajektorien nicht innerhalb des sicheren Raum-Zeit Domains (SRZD), das von dem zweiten DFP errechnet wurde. Im Fehlerfall lässt es sich nicht entscheiden, ob der erste DFP oder der zweite DFP fehlerhaft ist. Im Fehlerfall ist dann vorzugsweise vorgesehen, dass von der Entscheidungsinstanz die Notlauftrajektorie ausgewählt wird, ohne zu überprüfen, ob die Notlauftrajektorie innerhalb des SRZD liegt.

Im laufenden Betrieb ist es sehr schwierig zu entscheiden, ob ein festgestellter Fehler im Resultat eines DFP auf Grund eines Alterungsfehlers in der Hardware oder eines Softwarefehlers verursacht wurde. Diese Unterscheidung ist jedoch im Augenblick des Auftretens des Fehlers unwesentlich, da die vorgeschlagene Architektur beide Fehlerarten maskiert.

### Zitierte Literatur:

[1] US Pat. Application 20160033965 Device and Method for the Autonomous Control of Vehicles, published Feb. 4, 2016
[2] PCT Anmeldung PCT/AT2015/050212. Computersystem und Verfahren für sicherheitskritische Anwendungen. Patentanmeldung der FTS Computertechnik beim Österreichischen Patentamt. 3. Sept. 2015.
[3] Österreichische Patentanmeldung A 5073/2016. Fehlertolerantes Verfahren und Vorrichtung zur Steuerung einer autonomen technischen Anlage mittels diversitärer Trajektorienplanung. Patentanmeldung der FTS Computertechnik beim Österreichischen Patentamt. 16. August 2016
[4] Wikipedia, Autonomes Fahren, abgerufen am 11.8.2016
[5] Wikipedia, Automotive Safety Integrity Levels ISO 26262, abgerufen am 11.8.2016
[6] FAA. Advisory Circular System Safety Assessment for Part 23 Airplanes. URL: http://www.faa.gov/documentLibrary/media/Advisory-Circular/AC%2023.1309-1E.pdf, abgerufen am 11.8.2016
[7] Avizienis, A. The N-Version Approach to Fault-Tolerant Software, IEEE Trans. on Software Engineering, Vol 11, pp. 1491-1501. Dez. 1985
[8] Kopetz, H. Real-Time Systems, Design Principles for Distributed Embedded Applications. Springer Verlag. 2011.

## Patentansprüche

1. Verfahren zur Steuerung eines kontrollierten Objektes, beispielsweise eines Fahrzeugs, das in einer sich verändernden Umgebung eingebettet ist, wobei ein die Steuerung durchführendes elektronisches System Sensoren (111, 121, 131), insbesondere eine Vielzahl von Sensoren, Aktuatoren, insbesondere eine Vielzahl von Aktuatoren, und Knotenrechner (251, 252, 253; 351, 352), insbesondere eine Vielzahl von Knotenrechnern, umfasst, welche über ein Echtzeitkommunikationssystem (200, 300) Daten austauschen,
wobei das Verfahren vorsieht, dass das kontrollierte Objekt und dessen Umgebung mit Sensoren (111, 121, 131) periodisch beobachtet werden, und in jedem Frame basierend auf den durch die Beobachtung des kontrollierten Objektes und dessen Umgebung erfassten Daten mindestens zwei unabhängige Datenflusspfade (110, 120, 130), DFP, ausgeführt werden, wobei beispielsweise für jeden DFP die Beobachtung mittels unterschiedlicher Sensoren erfolgt, und wobei
• ein erster DFP (110) aus den durch die Beobachtung des kontrollierten Objektes und dessen Umgebung erfassten Daten mittels komplexer Software ein Modell des kontrollierten Objektes und der Umgebung des kontrollierten Objektes ermittelt und auf Basis dieses Modells eine Trajektorien-Planung (114) durchführt, um eine oder mehrere mögliche Trajektorien, die unter den gegebenen Umweltbedingungen einer vorgegeben Aufgabenstellung entsprechen, zu erstellen, und wobei
• ein zweiter DFP (120) aus den durch die Beobachtung des kontrollierten Objektes und dessen Umgebung erfassten Daten mittels komplexer Software (124), welche diversitär zu der komplexen Software des ersten DFPs ist, ein Modell des kontrollierten Objektes und der Umgebung des kontrollierten Objektes ermittelt und auf Basis dieses Modells ein *sicheres Raum-Zeit Domain,* SRZD, festlegt, innerhalb welchem SRZD alle sicheren Trajektorien liegen müssen, und wobei der erste DFP (110) und der zweite DFP (120) jeweils auf einer unabhängigen Fault Containment Unit (FCU) ausgeführt werden, und wobei
die Ergebnisse des ersten und des zweiten DFPs (110, 120)einer Entscheidungsinstanz (150) übergeben werden, wobei die Entscheidungsinstanz mittels einer *einfachen Software* realisiert ist, die auf einer fehlertoleranten Hardware ausgeführt wird und im Gegensatz zu komplexer Software formal überprüft oder erschöpfend getestet werden kann, und wobei die Entscheidungsinstanz überprüft, ob mindestens eine der vom ersten DFP (110) ermittelten Trajektorien *sicher* ist, d.h. innerhalb des SRZD liegt, das von dem zweiten DFP (120) ermittelt wurde, und wobei im Falle, dass dies zutrifft, eine vom ersten DFP ermittelte sichere Trajektorie ausgewählt wird, und wobei die Entscheidungsinstanz die der ausgewählten Trajektorie entsprechenden Sollwerte an eine Aktuatorsteuerung (260) übergibt, und wobei im Falle, dass dies nicht zutrifft, auf die Ergebnisse mindestens eines folgenden Frames gewartet wird, und wobei im Falle, dass auch im nächsten oder übernächsten Frame keine sichere Trajektorie vorhanden, ist von der Entscheidungsinstanz auf eine Notlauftrajektorie umgeschaltet wird.

2. Verfahren nach Anspruch 1, **dadurch gekennzeichnet, dass** Berechnungen der Entscheidungsinstanz auf einer TMR Hardware ausgeführt werden.

3. Verfahren nach Anspruch 1 oder 2, **dadurch gekennzeichnet, dass** Berechnungen der Entscheidungsinstanz gleichzeitig auf zwei unabhängigen self-checking Hardwarebaueinheiten ausgeführt werden.

4. Verfahren nach einem der Ansprüche 1 bis 3, **dadurch gekennzeichnet, dass** von einem dritten unabhängigen DFP eine Notlauftrajektorie errechnet wird und diese Notlauftrajektorie an die Entscheidungsinstanz gesendet wird.

5. Verfahren nach einem der Ansprüche 1 bis 4, **dadurch gekennzeichnet, dass** die Entscheidungsinstanz nach Feststellung, dass die von der ersten DFP errechnete Trajektorie sicher ist, überprüft, ob die Notlauftrajektorie sicher ist, und im Falle, dass die Notlauftrajektorie nicht vorhanden oder nicht sicher ist, eine Alarmmeldung abgibt, beispielsweise eine Alarmmeldung an einen Benutzer des kontrollierten Objektes, z.B. den Fahrer eines Fahrzeuges, übermittelt.

6. Elektronisches System zur Steuerung eines kontrollierten Objektes, beispielsweise eines Fahrzeugs, das in einer sich verändernden Umgebung eingebettet ist, wobei das elektronische System Sensoren (111, 121, 131), insbesondere eine Vielzahl von Sensoren, Aktuatoren, insbesondere eine Vielzahl von Aktuatoren, und Knotenrechner, insbesondere eine Vielzahl von Knotenrechnern (251, 252, 253; 351, 352), umfasst, welche über ein Echtzeitkommunikationssystem (200, 300) Daten austauschen,
wobei das elektronische System derart konfiguriert ist, **dass** es das kontrollierte Objekt und dessen Umgebung mit Sensoren (111, 121, 131) periodisch beobachtet, und in jedem Frame basierend auf den durch die Beobachtung des kontrollierten Objektes und dessen Umgebung erfassten Daten mindestens zwei unabhängige Datenflusspfade (110, 120, 130), DFP, ausführt, wobei beispielsweise für jeden DFP die Beobachtung mittels unterschiedlicher Sensoren erfolgt, und wobei
• ein erster DFP (110) aus den durch die Beobachtung des kontrollierten Objektes und dessen Umgebung erfassten Daten mittels komplexer Software ein Modell des kontrollierten Objektes und der Umgebung des kontrollierten Objektes ermittelt und auf Basis dieses Modells eine Trajektorien-Planung (114) durchführt, um eine oder mehrere mögliche Trajektorien, die unter den gegebenen Umweltbedingungen einer vorgegeben Aufgabenstellung entsprechen, zu erstellen, und wobei
• ein zweiter DFP (120) aus den durch die Beobachtung des kontrollierten Objektes und dessen Umgebung erfassten Daten mittels komplexer Software (124), welche diversitär zu der komplexen Software des ersten DFPs ist, ein Modell des kontrollierten Objektes und der Umgebung des kontrollierten Objektes ermittelt und auf Basis dieses Modells ein *sicheres Raum-Zeit Domain,* SRZD, festlegt, innerhalb welchem SRZD alle sicheren Trajektorien liegen müssen, und wobei der erste DFP (110) und der zweite DFP (120) jeweils auf einer unabhängigen Fault Containment Unit (FCU) ausgeführt werden, und wobei
die Ergebnisse des ersten und des zweiten DFPs (110, 120) einer Entscheidungsinstanz (150) übergeben werden, wobei die Entscheidungsinstanz mittels einer einfachen Software realisiert ist die auf einer fehlertoleranten Hardware ausgeführt wird und im Gegensatz zu komplexer Software formal überprüft oder erschöpfend getestet werden kann, und wobei die Entscheidungsinstanz überprüft, ob mindestens eine der vom ersten DFP (110) ermittelten Trajektorien sicher ist, d.h. innerhalb des SRZD liegt, das von dem zweiten DFP (120) ermittelt wurde, und wobei im Falle, dass dies zutrifft, eine vom ersten DFP ermittelte sichere Trajektorie ausgewählt wird, und wobei die Entscheidungsinstanz die der ausgewählten Trajektorie entsprechenden Sollwerte an eine Aktuatorsteuerung (260) übergibt, und wobei im Falle, dass dies nicht zutrifft, auf die Ergebnisse mindestens eines folgenden Frames gewartet wird, und wobei im Falle, dass auch im nächsten oder übernächsten Frame keine sichere Trajektorie vorhanden, ist von der Entscheidungsinstanz auf eine Notlauftrajektorie umgeschaltet wird.

7. System nach Anspruch 6, **dadurch gekennzeichnet, dass** Berechnungen der Entscheidungsinstanz auf einer TMR Hardware ausgeführt werden.

8. System nach Anspruch 6 oder 7, **dadurch gekennzeichnet, dass** Berechnungen der Entscheidungsinstanz gleichzeitig auf zwei unabhängigen self-checking Hardwarebaueinheiten ausgeführt werden.

9. System nach einem der Ansprüche 6 bis 8, **dadurch gekennzeichnet, dass** von einem dritten unabhängigen DFP eine Notlauftrajektorie errechnet wird und diese Notlauftrajektorie an die Entscheidungsinstanz gesendet wird.

10. System nach einem der Ansprüche 6 bis 9, **dadurch gekennzeichnet, dass** die Entscheidungsinstanz nach Feststellung, dass die von der ersten DFP errechnete Trajektorie sicher ist, überprüft, ob die Notlauftrajektorie sicher ist, und im Falle, dass die Notlauftrajektorie nicht vorhanden oder nicht sicher ist, eine Alarmmeldung abgibt, beispielsweise eine Alarmmeldung an einen Benutzer des kontrollierten Objektes, z.B. den Fahrer eines Fahrzeuges, übermittelt.

## Claims

1. A method for controlling a controlled object, for example a vehicle, which is embedded in a changing environment, wherein an electronic system carrying out the control comprises sensors (111, 121, 131), particularly a multiplicity of sensors, actuators, particularly a multiplicity of actuators, and node computers (251, 252, 253; 351, 352), particularly a multiplicity of node computers, which exchange data by means of a real-time communication system (200, 300), wherein the method provides that the controlled object and the environment thereof are monitored periodically using sensors (111, 121, 131), and at least two independent data flow paths (110, 120, 130) DFP are executed in each frame based on the data recorded by means of the monitoring of the controlled object and the environment thereof, wherein the monitoring takes place by means of different sensors for each DFP for example, and wherein
• a first DFP (110) determines a model of the controlled object and the environment of the controlled object by means of complex software from the data recorded by means of the monitoring of the controlled object and the environment thereof and carries out trajectory planning (114) on the basis of this model, in order to create one or more possible trajectories, which correspond to a predetermined task under the given environmental conditions, and wherein
• a second DFP (120) determines a model of the controlled object and the environment of the controlled object by means of complex software (124), which is different from the complex software of the first DFP, from the data detected by means of the monitoring of the controlled object and the environment thereof, and, on the basis of this model, determines a *safe space-time domain* SRZD, inside which SRZD all safe trajectories must lie,
and wherein the first DFP (110) and the second DFP (120) are executed on an independent fault containment unit (FCU) in each case,
and wherein the results of the first and the second DFP (110, 120) are transferred to a decision instance (150), wherein the decision instance is realized by means of *simple software,*
which is executed on fault-tolerant hardware and, by contrast with more complex software, can be formally checked or exhaustively tested,
and wherein the decision instance checks whether at least one of the trajectories determined by the first DFP (110) is *safe,* i.e. lies inside the SRZD, which was determined by the second DFP (120), and wherein, in the event that this is the case, a safe trajectory determined by the first DFP is selected, and wherein the decision instance transfers the set-point values corresponding to the selected trajectory to an actuator control (260), and wherein, in the event that this is not the case, the results of at least one following frame are awaited, and wherein, in the event that no safe trajectory is present also in the next or next but one frame, switching takes place from the decision instance to an emergency trajectory.

2. The method according to Claim 1, **characterized in that** calculations of the decision instance are executed on TMR hardware.

3. The method according to Claim 1 or 2, **characterized in that** calculations of the decision instance are executed simultaneously on two independent self-checking hardware modules.

4. The method according to one of Claims 1 to 3, **characterized in that** an emergency trajectory is calculated by a third independent DFP and this emergency trajectory is sent to the decision instance.

5. The method according to one of Claims 1 to 4, **characterized in that** the decision instance, after determining that the trajectory calculated by the first DFP is safe, checks whether the emergency trajectory is safe, and in the event that the emergency trajectory is not present or not safe, outputs an alarm notification, for example transmits an alarm notification to a user of the controlled object, e.g. the driver of a vehicle.

6. An electronic system for controlling a controlled object, for example a vehicle, which is embedded in a changing environment, wherein the electronic system comprises sensors (111, 121, 131), particularly a multiplicity of sensors, actuators, particularly a multiplicity of actuators, and node computers, particularly a multiplicity of node computers (251, 252, 253; 351, 352), which exchange data by means of a real-time communication system (200, 300),
wherein the electronic system is configured in such a manner that it monitors the controlled object and the environment thereof periodically using sensors (111, 121, 131), and executes at least two independent data flow paths (110, 120, 130) DFP in each frame based on the data recorded by means of the monitoring of the controlled object and the environment thereof, wherein the monitoring takes place by means of different sensors for each DFP for example, and wherein
• a first DFP (110) determines a model of the controlled object and the environment of the controlled object by means of complex software from the data recorded by means of the monitoring of the controlled object and the environment thereof and carries out trajectory planning (114) on the basis of this model, in order to create one or more possible trajectories, which correspond to a predetermined task under the given environmental conditions, and wherein
• a second DFP (120) determines a model of the controlled object and the environment of the controlled object by means of complex software (124), which is different from the complex software of the first DFP, from the data detected by means of the monitoring of the controlled object and the environment thereof, and, on the basis of this model, determines a *safe space-time domain* SRZD, inside which SRZD all safe trajectories must lie,
and wherein the first DFP (110) and the second DFP (120) are executed on an independent fault containment unit (FCU) in each case,
and wherein the results of the first and the second DFP (110, 120) are transferred to a decision instance (150), wherein the decision instance is realized by means of *simple software,*
which is executed on fault-tolerant hardware and, by contrast with more complex software, can be formally checked or exhaustively tested,
and wherein the decision instance checks whether at least one of the trajectories determined by the first DFP (110) is safe, i.e. always lies inside the SRZD, which was determined by the second DFP (120), and wherein, in the event that this is the case, a safe trajectory determined by the first DFP is selected, and wherein the decision instance transfers the set-point values corresponding to the selected trajectory to an actuator control (260), and wherein, in the event that this is not the case, the results of at least one following frame are awaited, and wherein, in the event that no safe trajectory is present also in the next or next but one frame, switching takes place from the decision instance to an emergency trajectory.

7. The system according to Claim 6, **characterized in that** calculations of the decision instance are executed on TMR hardware.

8. The system according to Claim 6 or 7, **characterized in that** calculations of the decision instance are executed simultaneously on two independent self-checking hardware modules.

9. The system according to one of Claims 6 to 8, **characterized in that** an emergency trajectory is calculated by a third independent DFP and this emergency trajectory is sent to the decision instance.

10. The system according to one of Claims 6 to 9, **characterized in that** the decision instance, after determining that the trajectory calculated by the first DFP is safe, checks whether the emergency trajectory is safe, and in the event that the emergency trajectory is not present or not safe, outputs an alarm notification, for example transmits an alarm notification to a user of the controlled object, e.g. the driver of a vehicle.

## Revendications

1. Procédé de commande d'un objet contrôlé, par exemple d'un véhicule, qui est intégré dans un environnement se transformant, sachant qu'un système électronique exécutant la commande comprend des capteurs (111, 121, 131), notamment une pluralité de capteurs, d' actionneurs, notamment une pluralité d'actionneurs et des calculateurs de nœuds (251, 252, 253 ; 351, 352), notamment une pluralité de calculateurs de nœuds, lesquels échangent des données par le biais d'un système de télécommunication en temps réel (200, 300),
sachant que le procédé prévoit que l'objet contrôlé et l'environnement de celui-ci sont périodiquement observés avec des capteurs (111, 121, 131) et que dans chaque cadre au moins deux trajectoires de flux de données (TFD) indépendantes (110, 120, 130) sont exécutées en se basant sur les données saisies par l'observation de l'objet contrôlé et de l'environnement de celui-ci, sachant par exemple que pour chaque TFD, l'observation a lieu au moyen de capteurs différents et sachant qu'
• une première TFD (110) détermine un modèle de l'objet contrôlé et de l'environnement de l'objet contrôlé à partir des données saisies par l'observation de l'objet contrôlé et de l'environnement de celui-ci au moyen d'un logiciel complexe et exécute une planification de trajectoires (114) sur la base de ce modèle pour établir une ou plusieurs trajectoires possibles, qui correspondent à une définition des tâches prédéfinie dans les conditions environnementales données, et sachant qu'
• une deuxième TFD (120) détermine un modèle de l'objet contrôlé et de l'environnement de l'objet contrôlé à partir des données saisies par l'observation de l'objet contrôlé et de l'environnement de celui-ci au moyen d'un logiciel complexe (124), lequel est diversitaire par rapport au logiciel complexe de la première TFD et définit un *Domaine Espace-Temps fiable* (DETF) à l'intérieur duquel DETR doivent se situer toutes les trajectoires fiables
et sachant que la première TFD (110) et la deuxième TFD (120) sont exécutées respectivement sur une *Unité de Confinement d'Erreur* (UCE) indépendante et sachant que les résultats de la première et de la deuxième TFD (110, 120) sont transmis à une instance décisionnelle (150), sachant que l'instance décisionnelle est réalisée au moyen d'un *logiciel simple,* qui est exécuté sur un matériel tolérant aux erreurs et peut être contrairement au logiciel complexe vérifié de façon formelle ou testé de façon exhaustive,
et sachant que l'instance décisionnelle vérifie, si au moins une des trajectoires déterminées par la première TFD (110) est fiable, c'est-à-dire, se situe à l'intérieur du DCEF, qui a été déterminé par la deuxième TFD (120) et sachant qu'au cas où cela se révèle exact, une trajectoire fiable déterminée par la première TFD est sélectionnée et sachant que l'instance décisionnelle transmet les valeurs théoriques correspondant à la trajectoire sélectionnée à une commande d'actionneur (260) et sachant qu'au cas où cela ne se révèle pas exact, on s'attend à des résultats d'au moins un cadre suivant et sachant qu'au cas également ou dans le cadre suivant ou deuxième cadre après il n'y a pas de trajectoire fiable, l'instance décisionnelle fera passer à une trajectoire de fonctionnement de secours.

2. Procédé selon la revendication 1, **caractérisé en ce que** les calculs de l'instance décisionnelle sont exécutés sur un matériel TMR.

3. Procédé selon la revendication 1 ou 2, **caractérisé en ce que** les calculs de l'instance décisionnelle sont exécutés simultanément sur deux unités modulaires de matériel indépendantes à auto-contrôle.

4. Procédé selon l'une quelconque des revendications 1 à 3, **caractérisé en ce qu'**une trajectoire de fonctionnement de secours est calculée par une troisième TFD indépendante et cette trajectoire de fonctionnement de secours est envoyée à l'instance décisionnelle.

5. Procédé selon l'une quelconque des revendications 1 à 4, **caractérisé en ce que** l'instance décisionnelle après constatation que la trajectoire calculée par la première TFD est fiable, vérifie, si la trajectoire de fonctionnement de secours est fiable, et au cas où la trajectoire de fonctionnement de secours n'est pas présente ou n'est pas fiable, délivre un message d'alarme, par exemple transmet un message d'alarme à un utilisateur de l'objet contrôlé, par ex. : au conducteur d'un véhicule.

6. Système électronique de commande d'un objet contrôlé, par exemple d'un véhicule, qui est incorporé dans un environnement se transformant, sachant que le système électronique comprend des capteurs (111, 121, 131), notamment une pluralité de capteurs, d'actionneurs, notamment une pluralité d'actionneurs et des calculateurs de nœuds, notamment une pluralité de calculateurs de nœuds (251, 252, 253; 351, 352), lesquels échangent des données par le biais d'un système de télécommunication en temps réel (200, 300),
sachant que le système électronique est configuré de telle manière qu'il observe périodiquement l'objet contrôlé et l'environnement de celui-ci avec des capteurs (111, 121, 131) et exécute dans chaque cadre au moins deux trajectoires de flux de données (TFD) indépendantes (110, 120, 130) en se basant sur les données saisies par l'observation de l'objet contrôlé et de l'environnement de celui-ci, sachant par exemple que pour chaque TFD, l'observation a lieu au moyen de capteurs différents et sachant qu'
• une première TFD (110) détermine un modèle de l'objet contrôlé et de l'environnement de l'objet contrôlé à partir des données saisies par l'observation de l'objet contrôlé et de l'environnement de celui-ci au moyen d'un logiciel complexe et exécute une planification de trajectoires (114) sur la base de ce modèle pour établir une ou plusieurs trajectoires possibles, qui correspondent à une définition des tâches prédéfinie dans les conditions environnementales données, et sachant qu'
• une deuxième TFD (120) détermine un modèle de l'objet contrôlé et de l'environnement de l'objet contrôlé à partir des données saisies par l'observation de l'objet contrôlé et de l'environnement de celui-ci au moyen d'un logiciel complexe (124), lequel est diversitaire par rapport au logiciel complexe de la première TFD et définit un *Domaine Espace-Temps fiable* (DETF) à l'intérieur duquel DETR doivent se situer toutes les trajectoires fiables
et sachant que la première TFD (110) et la deuxième TFD (120) sont respectivement exécutées sur une unité de confinement d'erreur (UCE) indépendante et sachant que les résultats de la première et de la deuxième TFD (110, 120) sont transmis à une instance décisionnelle (150), sachant que l'instance décisionnelle est réalisée au moyen d'un *logiciel simple,* qui est exécuté sur un matériel tolérant aux erreurs et peut être contrairement au logiciel complexe vérifié de façon formelle ou testé de façon exhaustive,
et sachant que l'instance décisionnelle vérifie, si au moins une des trajectoires déterminées par la première TFD (110) est fiable, c'est-à-dire, se situe à l'intérieur du DCEF, qui a été déterminé par la deuxième TFD (120) et sachant qu'au cas où cela se révèle exact, une trajectoire fiable déterminée par la première TFD fiable est sélectionnée et sachant que l'instance décisionnelle transmet les valeurs théoriques correspondant à la trajectoire sélectionnée à une commande d'actionneur (260) et sachant qu'au cas où cela ne se révèle pas exact, on s'attend à des résultats d'au moins un cadre suivant et sachant qu'au cas également ou dans le cadre suivant ou deuxième cadre après il n'y a pas de trajectoire fiable, l'instance décisionnelle fera passer à une trajectoire de fonctionnement de secours.

7. Système selon la revendication 6, **caractérisé en ce que** les calculs de l'instance décisionnelle sont exécutés sur un matériel TMR.

8. Système selon la revendication 6 ou 7, **caractérisé en ce que** les calculs de l'instance décisionnelle sont exécutés simultanément sur deux unités modulaires de matériel indépendantes à autocontrôle.

9. Système selon l'une quelconque des revendications 6 à 8, **caractérisé en ce qu'**une trajectoire de fonctionnement de secours est calculée par une troisième trajectoire de flux de données (TFD) indépendante et cette trajectoire de fonctionnement de secours est envoyée à l'instance décisionnelle.

10. Système selon l'une quelconque des revendications 6 à 9, **caractérisé en ce que** l'instance décisionnelle après constatation que la trajectoire calculée par la première TFD est fiable, vérifie, si la trajectoire de fonctionnement de secours est fiable, et au cas où la trajectoire de fonctionnement de secours n'est pas présente ou n'est pas fiable, émet un message d'alarme, par exemple transmet un message d'alarme à un utilisateur de l'objet contrôlé, par ex. : au conducteur d'un véhicule.
